# EUROPEAN PATENT SPECIFICATION

(11) **EP 1 340 006 B1**
(45) Date of publication and mention of the grant of the patent: **08.12.2004**
(21) Application number: 01965489.6
(22) Date of filing: 06.09.2001
(51) Int. Cl.: F16H 48/08, F16H 48/22

(54) **COMPONENTS SYSTEM FOR ENGAGING A STANDARD DIFFERENTIAL**
KOMPONENTENSYSTEM ZUM BEEINFLÜSSEN EINES STANDARDDIFFERENTIALS
SYSTEME DE COMPOSANTS POUR ADAPTER UN DIFFERENTIEL STANDARD

(30) Priority: 08.12.2000 GR 2000100424
(43) Date of publication of application: 03.09.2003
(73) Proprietor: Valasopoulos, Christos, 104 47 Athens (GR)
(72) Inventor: Valasopoulos, Christos, 104 47 Athens (GR)
(86) International application number: PCT/GR2001/000033
(87) International publication number: WO 2002/046644

(56) References cited:
- EP-A- 0 670 439
- EP-A- 0 939 246
- WO-A-88/05139
- WO-A-96/12124
- DE-B- 1 213 686
- GB-A- 2 182 733
- US-A- 3 548 683
- US-A- 4 291 591
- US-A- 5 888 163
- US-A- 6 095 939
- US-A- 6 146 304

## Description

The present differential relates to the construction, operation and application of differentials used in all types of wheeled vehicles, in particular of differential such as employed in connection with drive axles of motor vehicles.

### BACKGROUND OF THE INVENTION

A split casing limited slip differential mechanism is taught in European Application EP939246.

A transmission of power to both wheel axles through a pair of small toothed gears (pinions), supported by two free engaging axles, a pair of side toothed gears, a clutch mechanism with multiple disks furnished between the split mechanism casing and a thrust ring is achieving a limitation of the movement of the side gears, when the thrust ring, moves to an axial outwards direction.

The international application WO 00/37830 teaches a differential, which can be used as a standard differential or as a limited slip differential. The mechanism transmits the power through a small gear (pinion) on the input power axle to a pair of output power axles and comprises a casing, a toothed ring seated on the casing and rotating through the pinion around the differential longitudinal axis, a spoked component with a number of leys, on which a pair of spoked gears is seated, which move two side gears furnished each on the two output axles so that the motion of the wheels is controlled.

The U.S. patent 3.548.683 teaches a gear mechanism with an oscillating inner ring, which is furnished between the two side gears in a kinetic meshing with said gears so that an inertia force is introduced on each of the side aligned output power axles.

The international patent papers WO 88/05139, WO 9612124, the patents US 4,291,591, EP 0670439 teach several mechanisms, with oscillating components, rolling elements and reciprocating movements, which are considered non comparable to the present invention.

The Torsen type differentials are a specific and peculiar planetary gear system. In the center of the system, worm gears form the output towards the axles, while on their perimeter and the inside of the casing three pairs of shafts are fitted with gears meshing with the sun gear disposed on the central axis of the gear train and between the gears.

In case of a conventional differential, it is well known that the sum of the speed on both wheels attached to the two sides of the differential is constant under a specific number of revolutions per minute of the engine.

The sum of the speeds of two wheels of a conventional differential is directly proportional to the rotation speed of the motor shaft. Consequently, when both driving wheels are in traction on the pavement, with a different coefficient of friction (µ), then one wheel will accelerate and the other will decelerate with the well known undesirable effects. The one wheel with the lower adhesion or traction will spin, whereas the other wheel does not turn at all.

Under these conditions, the power transmitted by friction forces of the differential on both wheel is minimal and the vehicle is brought to a standstill.

When the wheel lacking traction spins, the wheel with traction will stop and there with the whole motor vehicle will stop.

To overcome this difficulty, various differential types of limited slip were developed, which aim at improving the adhesion, with the variation of torque distribution, on the wheel with the greatest adhesion. While the conventional differential has a ratio of torque distribution 50:50 i.e., ratio of torque distribution 1:1 or sometimes 1,5:1 the limited slip differential alters this torque distribution in favor of the axle with the greater adhesion or traction to the ratio 80:20 or 4:1 and in some cases 6:1. In spite of that, said differentials exhibit several disadvantages, such as premature wear of the system, due to the high friction forces and the resulting high temperatures which lead to the premature failure of the system. Other disadvantages are its heavy weight, high inertia forces and the big number of components used.

The present invention introduces a system of components assembled in a planetary mechanism of a convential differential, said system drastically reduces said disadvantages and allows in the case of adhesion loss of one driving wheel the variation of power distribution in favor of the wheel with the higher adhesion.

It comprises a properly configured shaft inserted inside the one piece or split casing of a standard in use differential, the pin of the standard differential inserted through a hole drilled transversally in the center of said shaft, on both ends of said pin are assembled the two bevel gears, through which power is transmitted and through the meshing of side bevel gears, the output shafts are rotating. The two ends of said shaft are configured as splines, wherein a bevel gear casing is assembled with its teeth meshing with the two side gears of the differential. In the borehole of said bevel gear casing, one at least conical ring is assembled with inner teeth matching the splines of said shaft ends, one at least spring ring of predetermined thickness and spring characteristic, one at least friction ring with inner teeth and one at least friction ring with outer teeth matching respectively the splines of said shaft and the inner teeth of said bevel gear casing.

The bevel gear casing element with the components, as described, assembled in its inner space, along with said shaft inserted in the standard differential, achieve in the case of adhesion loss of one wheel the increase of the mechanism engagement and the transmission of the remaining torque, or the whole torque, to the wheel with the greatest adhesion, on the other hand it allows the variation of the mechanism engagement degree through the combination of the following selective modifications in the construction of said elements a) the variation of the fit angle of the bevel gear casing on the properly configured shaft, b) the number of friction rings and c) the thickness and the spring characteristic of the spring ring.

It should be noted that the operation of the engagement mechanism can be achieved by the application on the properly configured shaft of two at least friction rings without the use of the conical ring.

In said system of engagement components, on the extension of said properly configured shaft and inside the bevel gear casing a lube oil centrifugal pump can be added, wherein with the operation of said pump a further resistance to the rotation of the mechanism is added, with result a further increase of its engagement.

The said briefly described system and its embodiments compared to a standard differential, apart from the important advantage of the engagement achieved, and the change in torque distribution in the cases of adhesion loss, has the additional advantage of increasing the torque bias due to the ratio of meshing teeth of the bevel gear and the side gear. Also, the application of this system succeeds in reducing the wear of the differential mechanism, due to the distribution of loads during operation to more components, namely gears, pinions, rings.

The component system is easily assembled with the mechanism of the standard in use planetary system differentials inside the existing one piece or split casing for almost all the vehicle types.

The manufacturing of the system components is easily executed with the usual manufacturing processes for the standard in use components and the assembly and disassembly of the system does not require exceptionally skilled personnel.

The cost for in series production of said components is minimal compared to the cost of the limited slip differential mechanisms and systems in use and its weight significantly lower.

### BRIEF DESCRIPTION OF DRAWINGS

The following description of the drawings wherein like numerals are used to designate like parts of the specific forms embodied in spirit and essential characteristics of this invention and to be considered in all respects as illustrative and no restrictive there of.
- Fig. 1: is a cross section of a standard in use differential, assembled with the set of components of the present invention.
- Fig. 2: is a front view, side view and down view of a shaft properly configured on its center and both ends, assembled in the standard differential in Fig. 1.
- Fig. 3: is a front view and the down view of a friction ring with internal teeth.
- Fig. 4: is a front view and the down view of a friction ring with external teeth.
- Fig. 5: is a front view and down view of a spring ring.
- Fig. 6: is a front view and down view of a conical ring.
- Fig. 7: is a front view and the down view of a bevel gear casing, fitted on the shaft shown in Fig. 1. Inside said bevel gear casing the components shown in Fig. 3,4,5,6.

### DETAILED DESCRIPTION OF DRAWINGS

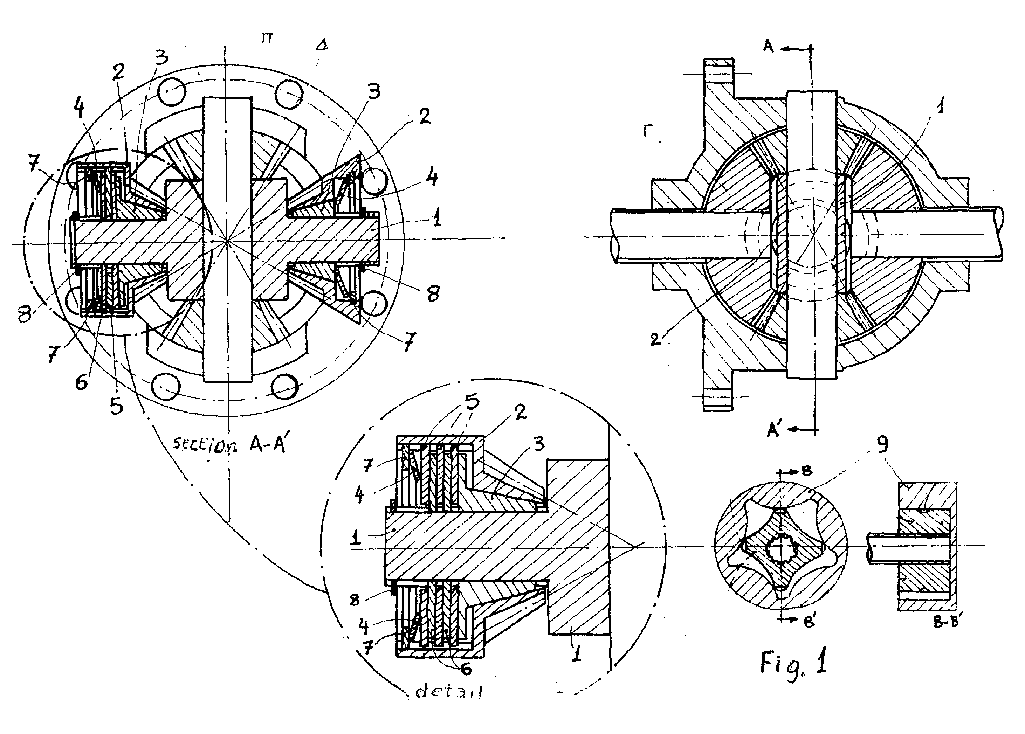

Referring to Figs 1,2,3,4,5,6,7 an application is presented a system of engagement components, introduced within a standard differential, comprising a properly configured shaft 1, one at least small bevel gear casing 2, one at least conical ring 3, one at least spring ring 4, one at least friction ring with external teeth 5, one at least friction ring with internal teeth 6, safety rings 7,8, a centrifugal pump 9.

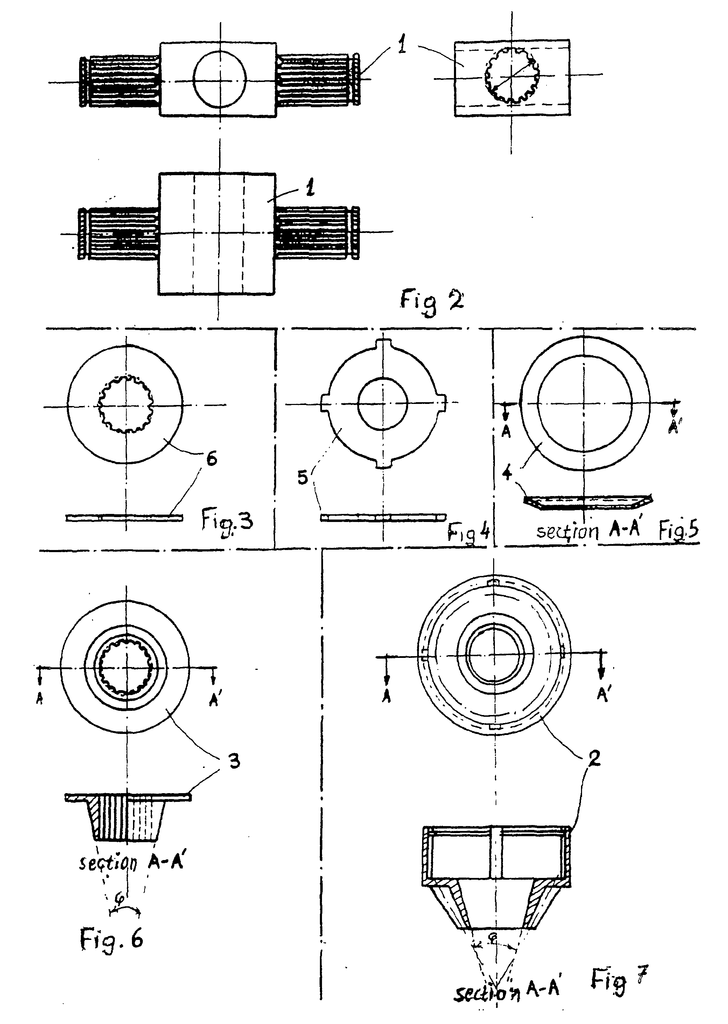

The elements of the engagement components system are presented separately in Fig. 2,3,4,5,6,7 while in Fig. 1 an assembled system of engagement components inside the casing of a standard differential is presented, wherein two bevel gears Δ on a pin receiving the motion along the input power shaft transmit it through the two meshing side gears Γ to the output shaft.
Figs 1,2 are views of a shaft (1) introduced in the center of the casing along an axis perpendicular to the vertical axis of pin n. The shaft 1 is configured in its middle part as a parallelepipedon with a borehole drilled in its center, wherein the pin n is inserted (Fig. 1,2). The ends of shaft 1 are machined as splines.
Fig. 3 are views of a friction ring 6 with inner teeth matching the splines on shaft ends 1 (Fig. 2).
Fig. 4 are views of a friction ring 5 with outer teeth matching the teeth on the bevel gear casing 2 (Fig. 7).
Fig. 5 are views of a spring ring 4 fitted inside the bevel gear casing 2.
Fig. 6 are views of a conical ring 3 with inner teeth fitted on shaft 1 and in the inside surface of the bevel gear casing 2.
Fig. 7 are views of a small bevel gear casing 2 which matches the splined ends of shaft 1 (Fig.1), wherein its inner surface, is conical with a desired angle ϕ, matching the conical ring 3. Said casing (2), apart from the outer teeth which engage it with the side gears teeth, has in its inner surface, inner teeth.

The elements of the system 2,3,4,5,6 as presented in Fig. 1 inside said casing 2 has been previously assembled on shaft 1 in the following order:

Friction ring 6 is fitted with its inner teeth matching the splined ends of the shaft, friction ring 5 is fitted on shaft 1 in contact with ring 6, while the outer teeth of said ring are matching the inner teeth of gear casing 2, spring ring 4 is fitted on shaft 1 in contact and under pressure from rings 5,6 and the conical ring 3 is fitted inside the shaft and the casing in contact with ring 5. The packing of the series of said elements 2,3,4,5,6 is secured with an adequate number of safety pins (7,8). The centrifugal pump 9 (Fig. 1) assembled if required on the extension of shaft 1 increases the engagement capability of the system.

The application of the components of the system as described previously and shown in Fig. 1 achieves, during the vehicle movement in the case of adhesion loss of one driving wheel, the increase of the differential mechanism engagement, due to the simultaneously produced increase of pressure and friction action during the rotation of the conical ring 3 and spring ring 4 inside the bevel gear casing on the one hand, and on the other hand of the friction rings 5,6, which produces a relevant jamming of the rotation of the small bevel gear casing 2 meshing with the side gears Γ of the differential, wherein in this manner an analog increase of the mechanism engagement degree is achieved dependent at first on the adhesion loss percent. Apart from that, the reduction of the angle size of the inner conical surface of the bevel gear casing 2 or/ and the increase of the number of the friction rings 5,6 controls the desired mechanism engagement degree increase. In extreme cases a centrifugal pump 9 assembled on the end of shaft 1 operating in lube oil can further increase the system engagement.

In combination with the previous mentioned an additional increase of torque bias is achieved due to the ratio of meshing teeth of the bevel gear to the teeth of the side gear which is 1 to 1,4 up to 1,6.

It is obvious that in the light of this description various modifications and structural changes may be made, consequently within the limits of amended claims, where reference to numbers is merely a helping tool and are not in anyway binding.

## Claims

1. Components system for engaging a standard differential comprising:
a shaft (1) inserted in the center of the casing (10) of a standard differential mechanism,
a bevel gear casing (2) adapted on said shaft (1) whose teeth are meshing with the teeth of the side gears (Γ) of the standard differential,
at least two friction rings (5,6), one with external and the other with internal teeth respectively, adapted to the shaft (1) inside the bevel gear casing (2),
at least one spring ring (4) adapted on said shaft inside said bevel gear casing,
at least one conical ring (3) with inner teeth fitted on said shaft (1) inside said bevel gear casing,
a centrifugal pump (9) full of lubricating oil adapted on the end of said shaft (1),
wherein the shaft (1) is inserted in the center of the casing of the standard differential mechanism along an axis perpendicular to the pin (Π) which bears the two bevel gears (Δ) through which power is transmitted from the input power shaft, and
wherein said shaft (1) is configured in its middle section as a parallelepipedon with a borehole drilled in its center through which the pin (Π) of the standard differential is inserted, and
wherein said shaft (1) is splined on both ends, wherein said friction rings, said conical ring and said spring ring are assembled on said shaft (1) and inside the bevel gear casing (2),
wherein, in the case of adhesion loss of one driving wheel, and the resulting friction between said friction rings, achieved through the engaged teeth of the small bevel gear casing (2) and the side gears (Γ), an increase of the mechanism engagement is achieved and the torque distribution is changed in favor of the wheel with the higher traction, and
wherein an additional increase of the torque bias is achieved due to the ratio of the bevel gears and side gears meshing teeth, which is 1 to 1,4 up to 1,6.

2. Components system for engaging a standard differential according to claim 1, wherein the fit angle ϕ of the inner conical, surface of the bevel gear casing (2), where the conical ring (3) is adapted, determines the desired engagement degree of the system.

3. Components system for engaging a standard differential according to claims 1,2 wherein the bevel gear casing has internal teeth where the external teeth of the friction rings (5) adapted on shaft (1) are matching.

4. Components system for engaging a standard differential according to claim 1 wherein the centrifugal pump (9) full of lubricating oil adapted on the end of said shaft (1) inside bevel gear casing (2) allows the further increase of the system engagement.

5. Components system for engaging a standard differential according to claim 1,2,3,4 wherein also the centrifugal pump is fitted inside the bevel gear casing (2).

## Patentansprüche

1. Komponentensystem zum Beeinflüssen eines Standarddifferentials, das aus folgenden Teilen besteht:
Einer Welle (1), die in da Zentrum des Gehäuses (10) eines Standarddifferentials Gehäuses eingeführt ist,
Einem Kegelgetriebegehäuse (2) das auf der besagten Welle (1) angebracht ist und dessen Zähne die Zähne der beiden seitlichen Zahnräder (Γ) des Standarddifferentials kämmt,
Mindestens zwei Schleifringe (5,6), jeweils einer mit äußerem Zahnkranz und einer mit innerem Zahnkranz, die auf der Welle (1) im innem des Kegelgetriebegehäuses (2) angebracht sind,
Mindestens ein Sprengring (4), der auf besagter Welle im Innern des besagten Kegelgetriebegehäuses angebracht ist,
Mindestens ein Keilring (3) mit innerem Zahnkranz, angebracht auf der besagten Welle (1) im Innern des besagten Kegelradgetriebes,
eine Zentrifugalpumpe (9) mit Schmieröl, angebracht auf der besagten Welle (1),
worin die Welle (1) in das Zentrum des Gehäuses des Standarddifferentials auf einer zum Bolzen (Π) lotrechten Achse eingefügt ist, auf dem beide Kegelgetriebe (Δ) gelagert sind, über welche die Kraft von einer Antriebswelle übertragen wird und
worin besagte Welle (1) in der Mitte als Parallelepipedon konfiguriert ist, mit einem Bohrloch in ihrer Mitte, durch welches der Bolzen (Π) des Standarddifferential durchgeführt wird und
worin die besagte Welle (1) an beiden Enden längsgenutet ist, worin besagte Schleifringe, besagter Keilring und besagter Sprengring auf der besagte Welle (1) und im Innern des Kegelgetriebegehäuses (2) montiert sind,
worin im Fall eines Haftungsverlustes eines Antriebsrades und die resultierende Reinbung zwischen den Schleifringen, die durch die verzahnten Zähne des kleinen Kegelgetriebegehäuses (2) und der seitlichen Zahnräder (Γ) erreicht wird, eine Steigerung der Einkupplung des Mechanismus erreicht wird und die Differentialverteilung zu Gunsten des Rades mit dem höheren Zug verändert word und
worin eine zusätzliche Steigerung des Verspannungsmomentes aufgrund des Verhältnisses zwischen den verkämmten Zahnrädern des Kegelrads und der seitlichen Zahnräder erreicht wird, das 1:1,4 bis 1,6 beträgt.

2. Komponentensystem zum Beeinflüssen eines Standarddifferentials nach Spezifizierung 1, worin der Passwinkel ϕ der inneren Konischen Oberfläche des Kegelgetriebes (2), auf dem der Keilring (3) angepasst ist, den gewünschten Kupplungsgrad des Systems bestimmt.

3. Komponentensystem zum Beeinflussen eines Standarddifferentials laut Spezifizierung 1,2, worin ein Kegelgetriebegehäuse aus einem inneren Zahnkranz besteht, in den die äußeren, auf der Welle (1) angebrachten Zahnkränze der Schleifringe (5) eingreifen.

4. Komponentensystem zum Beeinflüssen eines Standarddifferentials laut Spezifizierung 1 worin die mit Schmieröl gefüllte, auf dem Ende der besagten Welle (1) im inneren des Kegelgetriebes (2) angebrachte Zentrifugalpumpe (9) die weitere Einkupplung des Systems ermöglicht.

5. Komponentensystem zum Beeinflüssen eines Standarddifferentials laut Spezifizierung 1,2,3,4 worin auch die Zentrifugalpumpe im Innern des Kegelgetriebegehäuses (2) montiert ist.

## Revendications

1. Système de composants pour adopter un différentiel standard :
un arbre (1) inséré au milieu du boîtier (10) d'un mécanisme différentiel standard, un boîtier d'engrenage conique (2) adapté sur l'arbre mentionné par- dessus (1) dont les dents s'engrènent avec les dents des engrenages latéraux (Γ) du standard différentiel,
au moins deux bagues de frottement, (5,6), l'une à dents extérieurs et l'autre à dents intérieurs respectivement, adaptées sur l'arbre (1) à l'intérieur du boîtier d'engrenage conique (2),
au moins une bague d'arrêt à ressort (4) adaptée sur l'arbre mentionné pardessus à l'intérieur du boîtier d'engrenage conique mentionné par- dessus,
au moins une bague à dents intérieurs conique (3) ajustée sur l'arbre mentionné par- dessus (1) à l'intérieur du boîtier d'engrenage conique mentionné par- dessus,
au moins une pompe centrifuge (9) pleine de lubrifiant adaptée sur l'extrémité de l'arbre mentionné par- dessus (1),
en quoi l'arbre (1) est inséré au milieu du boîtier de l'appareil différentiel standard le long d'un axe perpendiculaire sur la goupille (Π) qui porte les deux engrenages coniques (Δ) à travers lesquels se transmet la puissance à partir de la puissance d'entrée sur l'arbre, et
en quoi l'arbre mentionné par- dessus (1) est configuré dans sa partie moyenne en tant qu'un parallélépipède avec un trou percé au milieu à travers lequel la goupille (Π) du différentiel standard est insérée, et
en quoi l'arbre mentionné par- dessus (1) est camelé sur les deux extrémités, en quoi la bague de frottement mentionnée par- dessus, la bague conique mentionnée par- dessus et la bague d'arrêt à ressort mentionnée par- dessus sont assemblées sur l'arbre mentionné par- dessus (1) et à l'intérieur du boîtier d'engrenage conique (2),
en quoi, en cas de perte d'adhérence d'une roue motrice qui en résulte et le frottement entre les bagues d'arrêt à ressort mentionnées par- dessus qui est achevé à travers les dents engagés du petit boîtier d'engrenage conique (2) et les engrenages latéraux (Γ), un accroissement de l'engrènement de l'appareil est achevé et la distribution du moment de rotation est changée en faveur de la roue supportant la traction la plus élevée, et
en quoi un accroissement additionnel de la tendance du moment de rotation est achevé à cause du rapport, variant de 1 à 1. 4 jusqu'à 1. 6, des dents des engrenages coniques et des engrenages latéraux qui s'engrènent.

2. Système de composants pour adopter un differentiel standard suivant la revendication 1, en quoi l'angle approprié ϕ de la surface intérieure du boîtier d'engrenage conique (2), ou s'adapte la bague conique (3), définit le degré d'engrènement du système désiré.

3. Système de composants pour adopter un differentiel standard suivant la revendication 1, 2 en quoi le boîtier d'engrenage conique dispose des dents intérieurs ou les dents extérieurs des bagues de frottement (5) adaptées sur l'arbre sont adéquats.

4. Système de composants pour adopter un differentiel standard suivant la revendication 1, en quoi la pompe centrifuge (9) pleine de lubrifiant adaptée sur l'extrémité de l'arbre mentionné par- dessus (1) à l'intérieur du boîtier d'engrenage conique (2) permet l'accroissement de l'engrènement du système additionnel.

5. Système de composants pour adopter un differentiel standard suivant la revendication 1, 2, 3, 4 en quoi la pompe centrifuge est aussi ajustée à l'intérieur du boîtier d'engrenage conique (2).
